Europäisches Patentamt

European Patent Office

Office européen des brevets

(11) Publication number: **0 467 469 A1**

# EUROPEAN PATENT APPLICATION

(21) Application number: **91201857.9**

(22) Date of filing: **15.07.91**

(51) Int. Cl.⁵: **F02F 1/16**, F16J 10/04

(30) Priority: **20.07.90 GB 9015932**

(43) Date of publication of application:
**22.01.92 Bulletin 92/04**

(84) Designated Contracting States:
**DE ES FR IT**

(71) Applicant: **AE AUTO PARTS LIMITED**
**Legrams Lane**
**Bradford, West Yorkshire BD7 1NO(GB)**

(72) Inventor: **Morris, Leonard Eric**
**The Glebe, Keighley Road**
**Colne, Lancashire BB8 7HF(GB)**

(74) Representative: **Gibson, George Kevin et al**
**Bowdon House Ashburton Road West**
**Trafford Park Manchester M17 1RA(GB)**

(54) **Cylinder liners.**

(57) A combustion engine has a cylinder liner with a top boss (3) which is an interference fit in the block (5), and a midstop flange (6). The outer portion of the liner between the top boss (3) and the midstop flange (6) forms a wall of a coolant passage (10). A cylindrical inner portion (15) of the liner is at least 30% of the length of the liner, and has a groove (27) in the outer surface thereof adjacent to its bottom end. In the groove is a support ring (18) which swells up under the influence of engine oil to contact a radial support section for the bottom end of the cylinder liner.

FIG.1

This invention relates to cylinder liners, and in particular to cylinder liners which are designed as wet liners with a mid-stop flange incorporated into the liner.

For convenience, in this specification and the accompanying claims, in an engine block each constituent cylinder liner in accordance with the present invention is considered to have an axis of symmetry which extends vertically above a cooperating crankshaft. The end of the liner remote from the crankshaft is referred to as the top or upper end, and the other end is referred to as the lower or bottom end. Approximately from the level of the mid stop flange to the upper end is considered to extend the outer portion of the liner, and the remaining, inner portion of the liner is considered to extend from said midstop flange level to the bottom end of the liner. However, it will be understood that references describing the relative positions of the ends, and of the two constituent portions, of any arrangement within an engine block of a liner in accordance with the present invention, are included in the corresponding references given above with respect to the arrangement of a liner extending vertically above the crankshaft.

Further, the term radial, or radially-extending, is used in respect of any distance, or feature, extending in any direction in a plane at right angles to the axis of the cylinder liner; and the term axial, or axially-extending, is used in respect of any distance, or feature, extending parallel to the liner axis.

A cylinder liner of the general type to which the present invention relates is described and claimed in UK Patent No 2 035 452. This specification describes a cylinder liner which has, in combination, a series of features which include a top boss on the liner the top boss having an axially extending cylindrical surface forming an interference fit with the engine block when in position; a midstop flange with a surface which extends radially outwardly from the liner and engages a complementary radially extending ledge in the engine block; an upper portion between the top boss and the midstop flange which forms a wall of a coolant passage, the axial length of which passage wall is not more than 30% of the axial length of the liner; and an inner portion which has an axial length of at least 30% of the axial length of the liner and which is wholly free of direct supporting and heat conducting contact with the engine block.

In practice this liner design suffers from the disadvantage that lack of radial support at its bottom end allows the inner portion of the liner to ovalise during use to an undesirable extent, and under extreme conditions this is liable to lead to cracking of the liner.

From a practical point of view, however, it is difficult to provide an adequate support at the bottom end of the liner since this end of the liner is to be inserted into the block first, and the liner has an interference fit on the top boss, as stated above.

An object of the present invention is to provide a liner which is able to have adequate radial support at its bottom end, and yet is readily fitted in the engine block.

Thus, according to the present invention there is provided in or for an internal combustion engine, the engine having a block containing a cylinder cavity extending between the engine head and a crankshaft to which a piston is connected for reciprocating travel within the cylinder cavity, a liner stop positioned intermediate the ends of the cylinder cavity, a liner coolant passage formed to provide coolant to the outer surface of the liner, and a substantially annular radial support section for the bottom end of the liner,
a replaceable cylinder liner which comprises
i) a top end boss having a cylindrical axially extending outer surface to form an interference fit within the cylinder cavity when in use,
(ii) a midstop flange having a radially extending surface which engages the liner stop in the cylinder cavity.
(iii) a portion between the top boss and midstop flange which forms a wall of the coolant passage,
(iv) a substantially cylindrical inner portion which forms at least 30% of the axial length of the liner,
(v) a groove in the outer surface of the liner adjacent to the bottom end of the liner, and
(vi) a support ring located in said groove, the ring being of an outside diameter not substantially greater than that of said bottom end before use, and being of a material which will swell under the influence of engine oil to contact with said radial support section for the bottom end of the liner.

It will be appreciated that at the bottom end of the liner means is provided which is effectively retracted when the liner is fitted, but swells to contact the annular radial support section, to give damping and radial support for the bottom end of the liner when in use in the engine.

The substantially annular radial support section for the bottom end of the liner may be discontinuous if gaps are required through which oil can drain, for example, but it is important that the support section is present at those locations on the block which are opposite to the thrust and non-thrust faces of the liner, that is in the plane within which a connecting rod will move when it is attached to a piston located in the liner , said plane also being perpendicular to the axis of rotation of the crankshaft of the engine.

If desired the support ring may be notched or otherwise shaped to ensure that oil can drain past the ring.

The preferred material for the support ring is a rubber compound, which is preferably also heat conductive to ensure that the rubber does not form a thermal barrier between the bottom end of the cylinder liner and the annular radial support section of the block. Preferred rubbers are nitrile rubbers, fluoroelastomers such as Viton, which is a copolymer of vinylidene fluoride and hexafluoropropylene, and chloropolymers such as Neoprene, which is 2-chloro-1, 3-butadiene.

The invention will now be described in more detail, by way of example only, with reference to the accompanying drawings of which:

Figure 1 is a side view of a cylinder liner in accordance with the invention at the time of fitting, partly in section, the sectional part of the figure also showing schematically in section adjacent portions of the engine block,

Figure 2 is an enlarged view of a fragment of figure 1 showing a support ring located in a groove at the bottom end of the liner, and after contact with engine oil, the ring having swollen to contact an annular radial support section of the engine block, and

Figure 3 is a plan view of an alternative form of support ring to that shown in Figures 1 and 2.

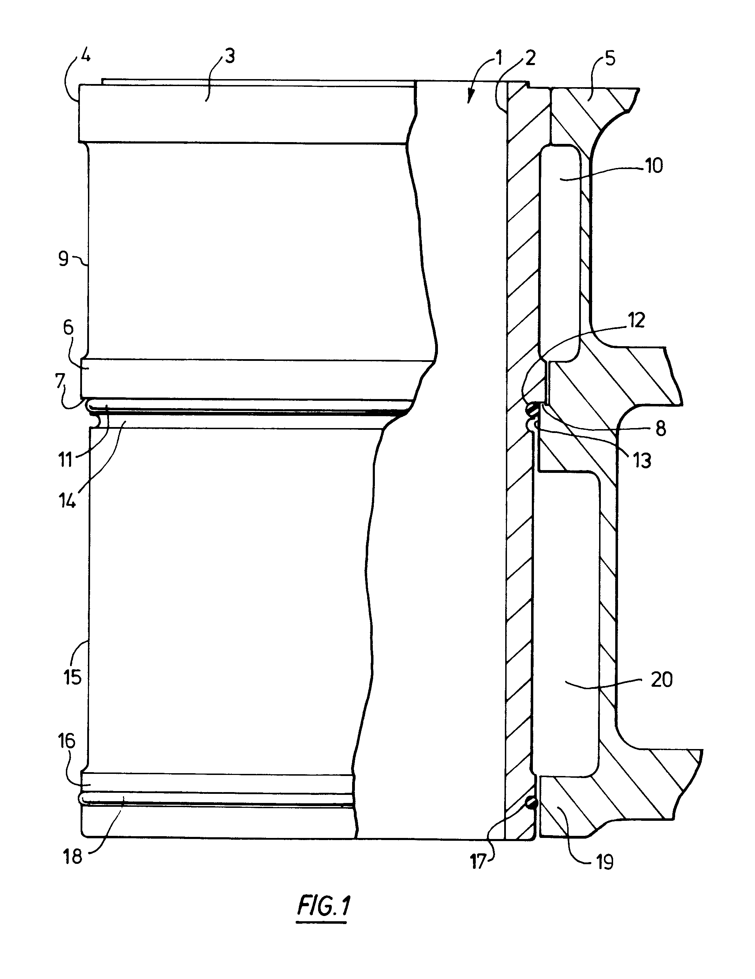

As shown in figure 1 a cylinder liner has a smooth cylindrical inner surface 2, against which a piston is to run, and also has an outer surface profile with several features. The top end of the cylinder liner 1, which is adjacent to a cylinder head (not shown) when in an engine, has a top boss 3 with an axially extending cylindrical outer surface 4 which makes an interference fit with an engaging section 5 of the engine block when the liner is in position in the cylinder cavity. Adjacent the mid-length of the liner is located a midstop flange 6, the lower surface 7 of which extends radially outwardly from the liner axis, and forms a sealing, and axially locating, engagement with an annular liner stop 8 in the engine block.

Between the top boss 3 and the midstop flange 6 lies a portion of the liner 9 which forms one wall of a channel 10 for coolant for the liner.

This coolant channel 10 is sealed at the top of the liner by the interference fit between the top boss 3 and engaging block section 5, with a backup seal being provided in the engine by a cylinder head gasket (not shown). At the midstop flange the coolant channel is sealed in any convenient way, but in the illustrated arrangement is sealed first by the engagement of the lower flange surface 7 with the annular liner stop 8. A second seal is provided by means of a rubber sealing ring 11 located in a groove 12 in the liner below the midstop flange 6. The rubber sealing ring 11 seals against an annular sealing surface 13 provided in the engine block below the liner stop 8. A second groove 14 is provided on the liner surface below the groove 12 and may be used for further sealing material if required.

An inner portion 15 of the liner extending from below the seal or seals beneath the midstop flange has an accurately defined register 16 on the bottom end of the liner. Within this register 16 there is provided a groove 17 extending around the liner and containing a rubber support ring 18.

A radial support section 19 for the bottom end of the liner is provided within the engine block adjacent the bottom register 16 on the liner. The cross sectional area of the rubber support ring 18 as fitted to the liner is such that it is accommodated within the groove 17 so that the outside diameter of the rubber ring at this time is not substantially greater than that of the register 16.

Since the liner 1 is fitted into the engine block from the top, when fitting, the bottom register 16, and rubber support ring, has to pass through the annular liner stop 8; and into the radial support section 19, whilst providing the interference fit between the cylindrical outer surface 4 and the engaging section 5 of the engine block. This is readily achieved with the liner of the present invention provided that proper attention is paid to the overall diameters of the various parts of the liner.

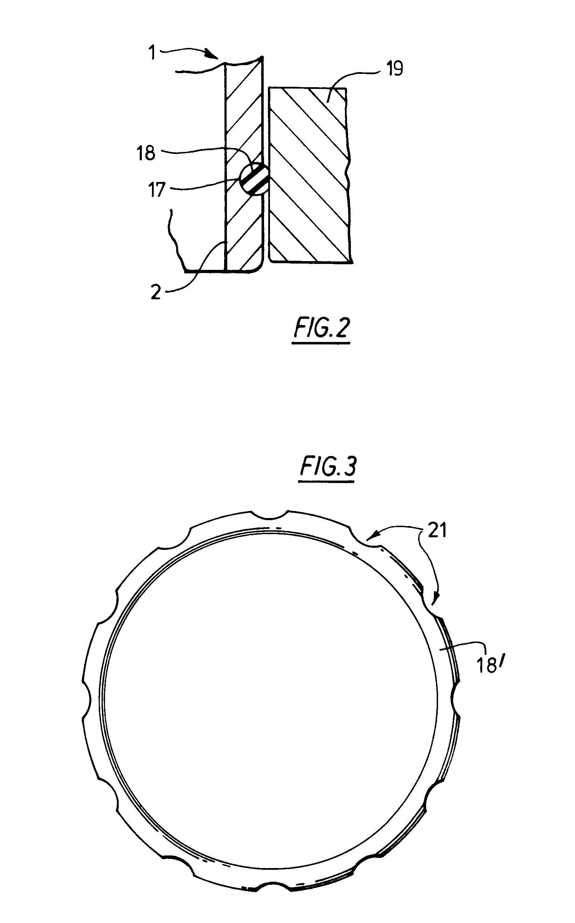

However, once the liner has been fitted into the block, oil is introduced into the engine and contact with engine oil causes the support ring 18 to swell and fit tightly against the radial support section 19 of the engine block. The position then assumed by the ring 18 is shown in Figure 2. The oil enters a cavity 20 between the inner portion 15 of the liner and an annular recess in the engine block, via a passage (not shown) leading from the valve train mechanism (not shown).

It will be understood that it is desirable that engine oil be able to pass the ring 18. Thus, for the liner shown in Figures 1 and 2 the radial support section 19 in the block is not a continuous annulus so that passages (not shown) are left for oil to pass out from the cavity 20 into the crankcase region. However, the radial support section 19 must be arranged to provide the required radial support for the bottom end of the liner adjacent those zones of the liner which are the thrust and non-thrust faces, that is in the plane within which the piston connecting rod is moving, and which plane is perpendicular to the axis of rotation of the crankshaft of the engine.

If gaps are left in the radial support section 19 as referred to in the preceding paragraph the support ring 18 may be a smooth torus as shown in Figures 1 and 2. However, if no gaps are left in the radial support section, or if extra oil circulation is needed, the outer surface of the support ring 18¹ may be notched as shown at 21 in Figures 3, or otherwise shaped. In this case support ring 18¹ allows for passage of oil past the ring even after the ring has swollen into its radial support position.

More than one support ring may be provided, these rings being axially spaced apart at the bottom end of the liner.

## Claims

1.  In or for an internal combustion engine, the engine having a block a containing a cylinder cavity extending between the engine head and a crankshaft to which a piston is connected for reciprocating travel within the cylinder cavity, a liner stop positioned intermediate the ends of the cylinder cavity, a liner coolant passage formed to provide coolant to the outer surface of the liner, and a substantially annular radial support section for the bottom end of the liner,

    a replaceable cylinder liner which comprises
      (i) a top end boss having a cylindrical axially extending outer surface to form an interference fit within the cylinder cavity when in use,
      (ii) a midstop flange having a radially extending surface which engages the liner stop in the cylinder cavity,
      (iii) a portion between the top boss and midstop flange which forms a wall of the coolant passage,
      (iv) a substantially cylindrical inner portion which forms at least 30% of the axial length of the liner, and the liner being characterised by including
      (v) a groove in the outer surface of the liner adjacent to the bottom end of the liner, and
      (vi) a support ring located in said groove, the ring being of an outside diameter not substantially greater than that of said bottom end before use, and being of a material which will swell under the influence of engine oil to contact with said radial support section for the bottom end of the liner.

2.  A replaceable cylinder liner as claimed in claim 1 characterised in that the substantially annular radial support section for the bottom end of the liner is discontinuous.

3.  A replaceable cylinder liner according to claim 1 or 2 characterised in that the support ring is notched or otherwise shaped to ensure that oil can drain past the ring.

4.  A replaceable cylinder liner according to any one of claims 1 to 3 characterised in that the support ring is of a rubber compound.

5.  A replaceable cylinder liner according to claim 4 characterised in that said rubber compound is a nitrile rubber compound.

6.  A replaceable cylinder liner according to any preceding claim characterised in that the support ring is heat conductive.

*FIG.1*

1

19

18

17

2

*FIG.2*

*FIG.3*

21

18'

**European
Patent Office**

**EUROPEAN SEARCH
REPORT**

Application Number

**EP 91 20 1857**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 030 983   (CATERPILLAR)<br>* Whole document *<br>— — — | 1 | F 02 F 1/16<br>F 16 J 10/04 |
| Y | GB-A-2 144 140   (CUMMINS)<br>* Whole document *<br>— — — | 1 | |
| A | GB-A-615 045   (TWIN COACH)<br>* Whole document *<br>— — — | 1 | |
| A | GB-A-2 143 899   (PORCHE)<br>* Whole document *<br>— — — | 1 | |
| A | US-A-4 588 309   (UHEYHARA)<br>* Whole document *<br>— — — — — | 1 | |

| | | | TECHNICAL FIELDS SEARCHED (Int. Cl.5) |
|---|---|---|---|
| | | | F 16 J<br>F 02 F |

The present search report has been drawn up for all claims

| Place of search | Date of completion of search | Examiner |
|---|---|---|
| The Hague | 24 October 91 | LEGER M.G.M. |